# EUROPÄISCHE PATENTSCHRIFT

(11) **EP 0 725 338 B1**
(45) Veröffentlichungstag und Bekanntmachung des Hinweises auf die Patenterteilung: **08.09.1999**
(21) Anmeldenummer: 96101148.3
(22) Anmeldetag: 27.01.1996
(51) Int. Cl.: G06F 9/445

(54) **Verfahren und Schaltungsanordnung für das Laden von Rechnern mit einem Rechnerstartprogramm**
Method and circuit for downloading a boot program in a computer
Méthode et circuit pour charger un programme initial dans un ordinateur

(30) Priorität: 02.02.1995 DE 19503312
(43) Veröffentlichungstag der Anmeldung: 07.08.1996
(73) Patentinhaber: ALCATEL, 75008 Paris (FR)
(72) Erfinder: Boos, Hardy, 71254 Ditzingen (DE); Endler, Joachim, 70435 Stuttgart (DE)
(74) Vertreter: Müller, Joachim, Dipl.-Ing.

(56) Entgegenhaltungen:
- EP-A- 0 335 812
- EP-A- 0 628 908

## Beschreibung

Die Erfindung betrifft ein Verfahren und eine Schaltungsanordnung für das Laden von Rechern mit einem Rechnerstartprogramm. Die Rechner arbeiten üblicherweise in einem Rechnerverbund zusammen und unterstützen sich gegebenenfalls gegenseitig, wobei ein Rechner, der Hauptrechner, die Steuerung weiterer Rechner, der Subrechner, übernimmt. Nach dem Einschalten der Versorgungsspannung oder nach einem Rückstellvorgang, müssen die Subrechner zunächst mit einem Rechnerstartprogramm, engl. bootstrap, geladen werden. Dazu enthält jeder Subrechner üblicherweise einen Startroutinespeicher, engl. bootstrap-ROM, in dem das Rechnerstartprogramm fest eingeschrieben ist. Derartige Festwertspeicher sind jedoch teuer, erfordern Platz und haben einen relativ großen Strombedarf. Deshalb besteht der Wunsch, die Anzahl dieser Festwertspeicher zu verringern. So ist ein Programm-Ladesystem bekannt, bei dem die Subrechner das Rechnerstartprogramm von dem Hauptrechner über einen Zweitor-Speicher, engl. dual-port memory, erhalten, vgl. Jpn. Pat. Appln. KOKAI Publication No. 59-55562. Bei diesem System wird das Rechnerstartprogramm vom Massenspeicher des Hauptrechners in den Zweitor-Speicher geladen und die Subrechner lesen dann, vom Hauptrechner gesteuert, jeweils das Rechnerstartprogramm aus dem Zweitor-Speicher. Weiterhin ist eine Schaltungsanordnung bekannt, bei der zwischen einem Hauptrechner und einem Zweitrechner ein gemeinsamer Speicher angeordnet ist, vgl. DE 36 39 571 A1. Das Rechnerstartprogramm gelangt vom Hauptrechner zunächst in den gemeinsamen Speicher und wird von dort von dem Zweitrechner ausgelesen. Zwar werden bei den genannten Lösungen die Startroutinespeicher für die einzelnen Subrechner eingespart, jedoch besteht nunmehr die Forderung, daß entsprechend der hohen Taktfrequenzen in einem Rechnerverbund die externe Zugriffszeit auf einen Zweitor-Speicher sehr kurz sein muß, da der Zweitor-Speicher auf eine Anfrage eines Subrechners sehr schnell reagieren muß, um das gesamte Rechnerstartprogramm mit einem Lesevorgang auf den Subrechner zu übertragen. Derartige Zweitor-Speicher sind dann aber extrem teuer und haben eine große Leistungsaufnahme. Aus den zuvor genannten Nachteilen resultiert die Aufgabe, ein Verfahren und eine Schaltungsanordnung für das Laden von Subrechnern mit einem Rechnerstartprogramm anzugeben, die mit einfachen Mitteln kostengünstig zu realisieren sind.

Erfindungsgemäß wird diese Aufgabe durch das im ersten Patentanspruch beschriebene Verfahren und durch die im dritten Patentantspruch beschriebene Schaltungsanordnung gelöst.

Das Wesen der Erfindung besteht darin, daß das Rechnerstartprogramm nicht wie bekannt, zusammenhängend aus einem Speicher, beispielsweise einem Zweitor-Speicher, zu dem Subrechner übertragen wird, sondern als Folge von Programmteilen des Rechnerstartprogramms. Somit können vorteilhafterweise kostengünstige Speicher geringeren Speicherumfangs eingesetzt werden. Der Ladevorgang des Subrechners wird durch einen sogenannten Haltemechanismus vom Hauptrechner unterbrochen, um dann jeweils einen neuen Programmteil des Rechnerstartprogramms in den dem Subrechner zugeordneten Speicher einzuschreiben. Nach Abschluß des Ladevorganges kann der Speicher zur üblichen Datenübertragung zwischen Hauptrechner und Subrechner verwendet werden. Das Verfahren ist für alle Prozessoren anwendbar, für die ein interner Ablauf für den Ladevorgang, eine sogenannte interne Bootroutine, vorgesehen ist.

Die Erfindung wird nachstehend an einem Ausführungsbeispiel erläutert. In der dazugehörigen Zeichnung zeigen
Fig. 1 ein Blockschaltbild der erfindungsgemäßen Schaltungsanordnung und
Fig. 2 ein Detailschaltbild der erfindungsgemäßen Schaltungsanordnung.

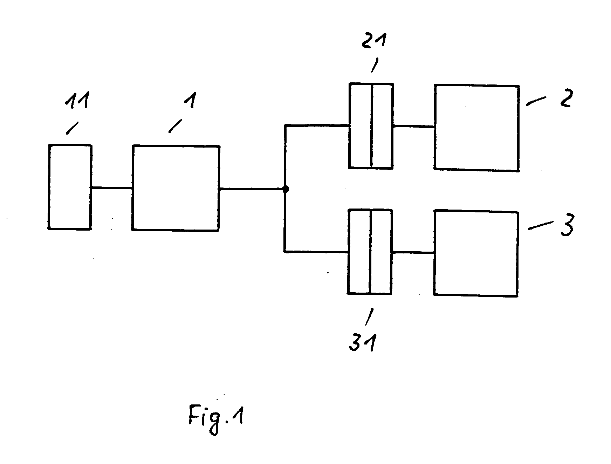

Gemäß Fig. 1 besteht die erfindungsgemäße Schaltungsanordnung im wesentlichen aus einem Hauptrechner 1 mit zugehörigem Speicher 11, beispielsweise einem EPROM, und aus mindestens einem Subrechner mit einem diesem zugeordneten Speicher. In Fig. 1 sind zwei Subrechner dargestellt, nämlich ein erster Subrechner 2 mit einem ersten bidirektionalen Register 21 und ein zweiter Subrechner 3 mit einem zweiten bidirektionalen Register 31. Die Anzahl der Subrechner mit zugehörigen Speichern kann auch größer als zwei sein. Mit Hilfe der Fig. 1 wird der Verfahrensablauf nach einem Rückstellvorgang, reset, oder nach dem Einschalten der Versorgungsspannung, power on, bei einem Subrechner beschrieben.
1. Reset oder power on beim ersten Subrechner 2.
2. Der Hauptrechner 1 setzt das Haltesignal des ersten Subrechners 2.
3. Der Hauptrechner 1 schreibt das erste Byte des zu übertragenden Rechnerstartprogramms in das erste bidirektionale Register 21.
4. Der Hauptrechner 1 hebt das Haltesignal des ersten Subrechners 2 auf.
5. Der erste Subrechner 2 liest das erste Byte aus dem ersten bidirektionalen Register 21 und setzt anschließend das Haltesignal.
6. Der Hauptrechner 1 erkennt, daß das erste bidirektionale Register 21 leer ist, schreibt das zweite Byte in das erste bidirektionale Register 21 und hebt das Haltesignal des ersten Subrechners 2 auf.
7. Der erste Subrechner 2, liest das zweite Byte aus dem ersten bidirektionalen Register 21 und setzt anschließend das Haltesignal.
8. Es werden sinngemäß die Verfahrensschritte 6 und 7 wiederholt, bis das gesamte Rechnerstartprogramm übertragen ist.
9. Vor dem Übertragen des letzten Bytes des Rechnerstartprogramms wird von dem Hauptrechner 1 das Haltesignal im ersten Subrechner 2 aufgehoben, so daß nach Abschluß des Programmladevorgangs das bidirektionale Register 21 für den Datenaustausch zwischen Hauptrechner 1 und erstem Subrechner 2 zur Verfügung steht.

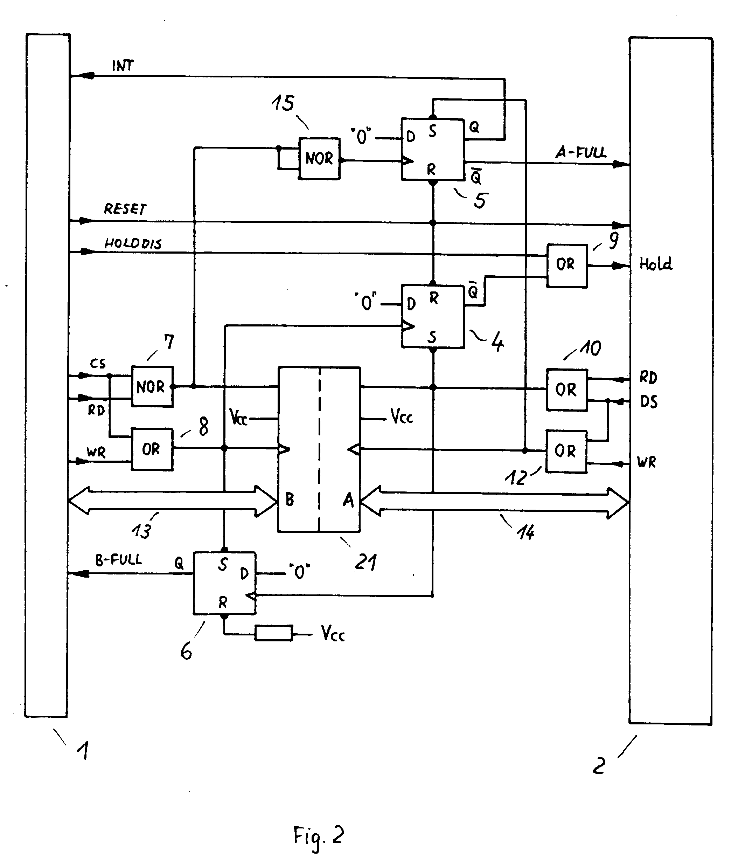

Die Funktionsweise der Schaltungsanordnung, mit der das Verfahren realisiert wird, wird im folgenden anhand des in Fig. 2 dargestellten Schaltbildes erläutert. Gemäß Fig. 2 besteht die Schaltungsanordnung aus dem Hauptrechner 1, dem Subrechner 2, dem dem Subrechner 2 zugeordneten bidirektionalen Register 21 und aus einem den Wartezustand des Subrechners 2 bestimmenden D-Flipflop 4, im folgenden als Hold-FF 4 bezeichnet, sowie sowie aus zwei D-Flipflops, die jeweils den Belegungszustand des bidirektionalen Registers 21 anzeigen, nämlich einem A-Full-FF 5 und einem B-Full-FF 6. Zur Verknüpfung der erforderlichen Steuersignale enthält die Schaltungsanordnung weiterhin eine erste NOR-Schaltung 7, eine zweite NOR-Schaltung 15 sowie eine erste OR-Schaltung 8, eine zweite OR-Schaltung 9, eine dritte OR-Schaltung 10 und eine vierte OR-Schaltung 12. Der Hauptrechner 1 ist über einen Bus 13 mit dem Anschluß B des bidirektionalen Registers 21 verbunden, und der Subrechner 2 ist über einen Bus 14 mit dem Anschluß A des bidirektionalen Registers 21 verbunden.

Der vom Hauptrechner 1 gesteuerte Ladevorgang des Rechnerstartprogramms in den Subrechner 2 erfolgt in folgenden Schritten:
1. Der Subrechner 2 wird durch den Hauptrechner 1 über die RESET-Leitung in den Rückstellzustand gesetzt.
2. Von dem Hauptrechner 1 wird das erste Byte des Rechnerstartprogramms über den Bus 13 in das bidirektionale Register 21 eingeschrieben. Dieser Schreibvorgang wird von der Steuerleitung WR angezeigt, und über die erste OR-Schaltung 8 wird der Q-Ausgang des Hold-FF 4 auf "O" gesetzt. Dadurch wird das Halte-Signal Hold für den Subrechner 2 durch logische Verknüpfung des Q-Ausgangssignals des Hold-FF 4 mit dem Steuersignal HOLDDIS des Hauptrechners 1 in der zweiten OR-Schaltung 9 gelöscht. Gleichzeitig wird der B-Full-FF 6 gesetzt, um dem Hauptrechner 1 über die Leitung B-FULL anzuzeigen, daß alle Plätze des bidirektionalen Registers 21 nunmehr belegt sind.
3. Der Hauptrechner aktiviert nun seine Halteschaltung, indem das Steuersignal HOLDDIS auf "O" gesetzt wird. Die Arbeitsweise des Subrechners 2 hängt nun nur von der Stellung des Hold-FF 4 ab, das Halte-Signal Hold im Subrechner 2 ist nunmehr inaktiv.
4. Von dem Hauptrechner 1 wird der Rückstellzustand des Subrechners 2 über die Steuerleitung RESET aufgehoben. Das Rechnerstartprogramm des Subrechners 2 läuft nun an und der weitere Ablauf wird von der Halteschaltung gesteuert, die aus dem Hold-FF 4 und der zweiten OR-Schaltung 9 gebildet wird und von den Steuersignalen WR, HOLDDIS und dem Ausgangssignal des Hold-FF 4 gesteuert wird.
5. Der Subrechner 2 beginnt mit einem Lesezyklus und greift über den Bus 14 auf das bidirektionale Register 21 zu. Dieser Vorgang wird von dem Steuersignal RD des Subrechners 2 angezeigt und über die dritte OR-Schaltung 10 wird der Subrechner 2 über das Setzen des Hold-FF 4 in den Haltezustand gebracht und gleichzeitig wird der B-Full-FF 6 so getaktet, daß über die Steuerleitung B-FULL dem Hauptrechner 1 angezeigt wird, daß das bidirektionale Register 21 leer ist.
6. Wenn der Subrechner 2 den Lesezyklus beendet hat, wird er infolge des nunmehr über die zweite OR-Schaltung 9 wirksamen Hold-Signals angehalten und dem Hauptrechner 1 wird durch das Steuersignal auf der Steuerleitung B-FULL angezeigt, daß das nächste Byte des Rechnerstartprogramms zum bidirektionalen Register 21 übertragen werden kann. Der folgende Schreibzyklus des Hauptrechners 1 befreit den Subrechner 2 wieder aus dem Haltezustand und der Vorgang läuft weiter ab wie unter Pkt. 5 beschrieben.
7. Nachdem von dem Hauptrechner 1 der Ladevorgang des Rechnerstartprogramms in den Subrechner 2 beendet worden ist, indem das letzte Byte des Rechnerstartprogramms in das bidirektionale Register 21 geschrieben worden ist, wird die Wirkung der unter Pkt. 5 beschriebenen Halteschaltung außer Funktion gesetzt, indem das HOLDDIS-Signal des Hauptrechners 1 auf "1" gesetzt wird.
8. Nunmehr wird von dem Subrechner 2 die interne Initialisierungsphase begonnen. Am Ende dieser Phase wird von dem Subrechner 2 über den Bus 14 ein Schreibvorgang zu dem bidirektionalen Register 21 eingeleitet. Dieser Zustand wird über die Steuerleitung WR des Subrechners 2 signalisiert, über die vierte OR-Schaltung 12 wird der A-Full-FF 5 gestellt und als Folge wird dem Hauptrechner 1 über Steuerleitung INT angezeigt, daß der Subrechner 2 korrekt initialisiert ist. Das bidirektionale Register 21 kann nun zum üblichen Datenaustausch zwischen Hauptrechner 1 und Subrechner 2 verwendet werden. Die bei der Beschreibung des Ladevorganges nicht erwähnte erste NOR-Schaltung 7 und zweite NOR-Schaltung 15 sind für die Steuerung zwischen Hauptrechner 1 und Subrechner 2 bei einem Lesevorgang des Hauptrechners 1 erforderlich. Das Steuersignal CS am Hauptrechner 1 und das Steuersignal DS am Subrechner 2 dient jeweils zur Auswahl der entsprechenden Schaltung im Rechnerverbund.

## Patentansprüche

1. Verfahren für das Laden von mindestens einem Subrechner (2,3) mit einem Rechnerstartprogramm von einem Hauptrechner (1), in dessen Speicher (11) das Rechnerstartprogramm abgelegt ist,
**dadurch gekennzeichnet**, daß
das Rechnerstartprogramm als Folge von Programmteilen zu dem Subrechner (2, 3) dergestalt übertragen wird, daß jeweils ein Programmteil des Rechnerstartprogramms von dem Hauptrechner (1) in einen dem Subrechner (2, 3) zugeordneten Speicher (21, 31) eingeschrieben wird und von dem Subrechner (2,3) anschließend aus dem dem Subrechner (2,3) zugeordneten Speicher (21,31) ausgelesen wird und der Subrechner (2,3) nach Beendigung des Lesevorganges solange einen Wartezustand einnimmt, bis aus dem Hauptrechner (1) der folgende Programmteil des Rechnerstartprogramms in den dem Subrechner (2, 3) zugeordneten Speicher (21, 31) eingeschrieben worden ist, und daß nachdem der letzte Programmteil des Rechnerstartprogramms von dem Subrechner (2,3) gelesen worden ist, der Wartezustand des Subrechners (2,3) von dem Hauptrechner (1) aufgehoben wird.

2. Verfahren nach Anspruch 1, dadurch gekennzeichnet, daß ein Programmteil des Rechnerstartprogramms aus einem Byte besteht.

3. Schaltungsanordnung zur Durchführung des Verfahrens nach Anspruch 1, dadurch gekennzeichnet, daß der Hauptrechner (1) über einen Bus (13) jeweils mit einem dem Subrechner (2,3) zugeordneten Speicher (21,31) verbunden ist und der dem Subrechner (2, 3) zugeordnete Speicher (21,31) seinerseits über einen Bus (14) mit dem Subrechner (2,3) verbunden ist.

4. Schaltungsanordnung nach Anspruch 3, dadurch gekennzeichnet, daß der Hauptrechner (1) mit dem Ausgang (Q) einer den Füllzustand des dem Subrechner (2, 3) zugeordneten Speichers (21) anzeigenden bistabilen Schaltung (6) verbunden ist, deren Stelleingang (S) mit der Schreibleitung (WR) des Hauptrechners (1) und mit dem Takteingang einer die Dauer des Wartezustands des Subrechners (2) bestimmenden bistabilen Schaltung (4) verbunden ist.

5. Schaltungsanordnung nach Anspruch 3, dadurch gekennzeichnet, daß der dem Subrechner (2,3) zugeordnete Speicher (21, 31) ein bidirektionales Register ist.

## Claims

1. Process for loading at least one subcomputer (2, 3) with a start-up program from a host computer (1), in the memory (11) of which the start-up program is stored,
characterised in that
the start-up program is transferred as a sequence of program parts to the subcomputer (2, 3) in such a way that one part of the start-up program at a time is written from the host computer (1) into a memory (21, 31) assigned to the subcomputer (2, 3) and is subsequently read out by the subcomputer (2, 3) from the memory (21, 31) assigned to the subcomputer (2, 3) and, after completion of the read operation, the subcomputer (2, 3) assumes a wait state for such time until the subsequent part of the start-up program has been written from the host computer (1) into the memory (21, 31) assigned to the subcomputer (2, 3), and in that after the last part of the start-up program has been read by the subcomputer (2, 3) the wait state of the subcomputer (2, 3) is cancelled by the host computer (1).

2. Process according to Claim 1, characterised in that a part of the start-up program consists of one byte.

3. Circuit arrangement for implementing the process according to Claim 1, characterised in that the host computer (1) is connected via a bus (13) to each of the memories (21, 31) assigned to the respective subcomputer (2, 3), and each of the memories (21, 31) assigned to the respective subcomputer (2, 3) is in turn connected via a bus (14) to the respective subcomputer (2, 3).

4. Circuit arrangement according to Claim 3, characterised in that the host computer (1) is connected to the output (Q) of a bistable circuit (6) indicating the loading state of the memory (21) assigned to the subcomputer (2, 3), and the actuating input (S) of said bistable circuit is connected to the write line (WR) of the host computer (1) and to the clock input of a bistable circuit (4) which determines the duration of the wait state of the subcomputer (2 ).

5. Circuit arrangement according to Claim 3, characterised in that the memory (21, 31) assigned to the subcomputer (2, 3) is a bidirectional register.

## Revendications

1. Procédé pour charger dans au moins un ordinateur secondaire (2, 3) un programme de lancement à partir d'un ordinateur principal (1) dans la mémoire (11) duquel est stocké le programme de lancement, caractérisé en ce que le programme de lancement est transféré sur l'ordinateur secondaire (2, 3) sous forme d'une suite de parties de programme, de telle sorte que respectivement une partie de programme du programme de lancement est inscrite par l'ordinateur principal (1) dans une mémoire (21, 31) affectée à l'ordinateur secondaire (2, 3) et est lue ensuite par l'ordinateur secondaire (2, 3) à partir de la mémoire (21, 31) affectée à l'ordinateur secondaire (2, 3), et l'ordinateur secondaire (2, 3), à l'issue de l'opération de lecture, adopte un état d'attente jusqu'à ce que la partie de programme suivante du programme de lancement soit inscrite à partir de l'ordinateur principal (1) dans la mémoire (21, 31) affectée à l'ordinateur secondaire (2, 3), et en ce que l'état d'attente de l'ordinateur secondaire (2, 3) est supprimé par l'ordinateur principal (1) après que la dernière partie de programme du programme de lancement a été lue par l'ordinateur secondaire (2, 3).

2. Procédé selon la revendication 1, caractérisé en ce qu'une partie de programme du programme de lancement se compose d'un octet.

3. Installation de distribution pour exécuter le procédé selon la revendication 1, caractérisée en ce que l'ordinateur principal (1) est relié par l'intermédiaire d'un bus (13) respectivement à une mémoire (21, 31) affectée à l'ordinateur secondaire (2, 3), et la mémoire (21, 31) affectée à l'ordinateur secondaire (2, 3) à son tour est reliée par l'intermédiaire d'un bus (14) à l'ordinateur secondaire (2, 3).

4. Installation de distribution selon la revendication 3, caractérisée en ce que l'ordinateur principal (1) est relié à la sortie (Q) d'un circuit bistable (6) indiquant l'état de remplissage de la mémoire (21) affectée à l'ordinateur secondaire (2, 3), et dont l'entrée de réglage (S) est reliée à la ligne d'écriture (WR) de l'ordinateur principal (1) et avec l'entrée de cycle d'un circuit bistable (4) déterminant la durée de l'état d'attente de l'ordinateur secondaire (2 ).

5. Installation de distribution selon la revendication 3, caractérisée en ce que la mémoire (21, 31) affectée à l'ordinateur secondaire (2, 3) est un registre bidirectionnel.
